(19) Europäisches Patentamt
European Patent Office
Office européen des brevets

(11) **EP 1 225 078 B1**

(12) **EUROPÄISCHE PATENTSCHRIFT**

(45) Veröffentlichungstag und Bekanntmachung des Hinweises auf die Patenterteilung:
**19.12.2007 Patentblatt 2007/51**

(51) Int Cl.:
*B60K 28/16* (2006.01)  *B66F 9/075* (2006.01)
*B60L 15/20* (2006.01)  *B60K 17/10* (2006.01)
*B60L 3/10* (2006.01)

(21) Anmeldenummer: **02000555.9**

(22) Anmeldetag: **10.01.2002**

(54) **Verfahren zur Beeinflussung des Drehmoments an mindestens einem Antriebsrad eines Flurförderzeugs**

Method for controlling the drive torque applied to at least one wheel of an industrial truck

Procédé de régulation du couple moteur entraînant au-moins une roue d'un chariot de manutention

(84) Benannte Vertragsstaaten:
**DE FR GB IT SE**

(30) Priorität: **20.01.2001 DE 10102523**

(43) Veröffentlichungstag der Anmeldung:
**24.07.2002 Patentblatt 2002/30**

(73) Patentinhaber: **Jungheinrich Aktiengesellschaft**
**22047 Hamburg (DE)**

(72) Erfinder:
• **Nissen, Nis-Georg, Dipl.-Ing.**
**24558 Henstedt-Ulzburg (DE)**
• **Baginski, Ralf, Dipl.-Ing.**
**21398 Neetze (DE)**
• **Mänken, Frank, Dr.-Ing.**
**24558 Henstedt-Ulzburg (DE)**

(74) Vertreter: **Hauck Patent- und Rechtsanwälte**
**Neuer Wall 41**
**20354 Hamburg (DE)**

(56) Entgegenhaltungen:
**DE-A1- 19 826 945**

• **PATENT ABSTRACTS OF JAPAN Bd. 1997, Nr. 02, 28. Februar 1997 (1997-02-28) & JP 08 265917 A (NIPPON YUSOKI CO LTD), 11. Oktober 1996 (1996-10-11)**
• **PATENT ABSTRACTS OF JAPAN Bd. 014, Nr. 478 (M-1036), 18. Oktober 1990 (1990-10-18) & JP 02 193502 A (TOSHIBA CORP), 31. Juli 1990 (1990-07-31)**

**Beschreibung**

Die Erfindung bezieht sich auf ein Verfahren zur Beeinflussung des Drehmoments an mindestens einem Antriebsrad eines Flurförderzeugs zu Antriebs- und/oder Bremszwecken nach dem Patentanspruch 1.

Bei rutschigen Bodenverhältnissen oder ungünstiger Lastverteilung tritt bei Flurförderzeugen häufig das Problem auf, dass das Antriebsrad oder die Antriebsräder durchrutschen. Da das angetriebenen Rad häufig auch das zu lenkende Rad ist, führt ein Durchrutschen außerdem zu schlechten Manövriereigenschaften. Zusätzlich bedingt das Durchrutschen einen erhöhten Verschleiß an Reifen bzw. Bandagen. Der Wirkungsgrad des Antriebs verschlechtert sich drastisch, da die Antriebsleistung nicht in Bewegungsenergie umgesetzt wird. Entsprechend ist auch die Rückgewinnung der Bewegungsenergie beim Abbremsen reduziert. Wird über den Antrieb abgebremst, führt ein erhöhter Schlupf naturgemäß zu einem deutlich reduzierten Bremsmoment.

Aus der Automobilindustrie ist allgemein die Verwendung von sogenannten Antiblockiersystemen bekannt geworden. Durch Ermittlung des Schlupfes beim Bremsen wird durch entsprechende Beaufschlagung des Bremssystems dafür gesorgt, dass der Schlupf nicht zu grosse Werte annimmt, um insbesondere ein Blockieren zu vermeiden.

Für Flurförderzeuge ist zwar bekannt, mechanische Bremsen einzusetzen, die auf die Antriebsräder wirken, bei elektromotorisch oder auch hydraulisch angetriebenen Flurförderzeugen wird häufig über den Antrieb abgebremst

Aus DE 198 26 945 A1 ist ein Verfahren zur Verhinderung des Durchdrehens der Räder eines mit einem Elektroantrieb versehenen Kraftfahrzeugs bekannt geworden mit zwei einzeln angetriebenen Rädern und mit zwei nicht angetriebenen Rädern. Die Drehzahlen der angetriebenen Räder werden von einem Sensor ermittelt und in einem Vergleicher einer elektronischen Steuerschaltung mit den Drehzahlen der beiden nicht angetriebenen Räder verglichen. Bei Überschreiten eines vorgegebenen Wertes, um den eine der Drehzahlen der angetriebenen Räder die Drehzahl der nicht angetriebenen Räder übersteigt, wird das Antriebsmoment für dieses angetriebene Rad reduziert.

Somit wird bei unterschiedlichen Traktionsverhältnissen an zwei Rädern für einen Ausgleich gesorgt. Das Drehmoment wird innerhalb eines vorgegebenen Fensters gehalten, solange die Differenz zwischen den Schlupf-Werten einen vorgegebenen Wert übersteigt.

Aus JP-A-8265917 ist bekannt, den Soll-Wert eines Soll-Wert-Gebers für den Antrieb eines Flurförderzeugs in Abhängigkeit vom gemessenen Schlupf am Antriebsrad zu modifizieren.

Der Erfindung liegt die Aufgabe zu Grunde, ein Verfahren anzugeben, mit dem das Drehmoment am Antriebsrad eines Flurförderzeugs zu Antriebs- und Bremszwecken schlupfabhängig beeinflusst wird.

Diese Aufgabe wird durch die Merkmale des Patentanspruchs 1 gelöst.

Bei dem erfindungsgemäßen Verfahren wird von einem Flurförderzeug ausgegangen, bei dem das Sollmoment für den Antrieb durch einen Vergleich von Antriebsdrehzahl und einem Sollwertgeber stattfindet. Dies geschieht häufig dadurch, dass der Fahrzeugführer den Fahrschalter oder ein Pedal betätigt, wodurch abhängig von seiner Auslenkung und dem jeweiligen Betriebszustand ein Sollmoment für den Antrieb über einen Drehzahlregler vorgegeben wird, über den derartige Fahrzeuge üblicherweise verfügen. Erfindungsgemäß wird der Absolutwert dieses Sollmoments um ein schlupfabhängiges Korrekturmoment verringert. Es versteht sich, dass das Antriebsmoment verschiedene Vorzeichen haben kann, je nachdem ob das Fahrzeug sich im Antriebs- oder Bremszustand bei Vorwärts- oder Rückwärtsfahrt befindet (Vier-Quadrantenbetrieb). Das Korrekturmoment ergibt sich aus dem jeweils vorliegenden Schlupf und wird im Ausgang eines Schlupfreglers erzeugt. Auf den Eingang des Schlupfreglers wird eine Differenz aus einem Sollwert für den Schlupf und einem Schlupf-Ist-Wert gegeben. Der Schlupf-Ist-Wert ist naturgemäß die Differenz zwischen der Fahrzeuggeschwindigkeit und der Umfangsgeschwindigkeit des Antriebsrades. Je größer der Schlupf, um so größer das Korrekturmoment, so das in jedem Falle gesichert ist, dass das jeweils optimale Moment am Antriebsrad bzw. am gebremsten Rad angreift.

Das erfindungsgemäße Verfahren arbeitet sicher und unabhängig von den verschiedenen Betriebszuständen. Es bedingt jedoch die Vorgabe eines Soll-Schlupfes. Wird das Reibverhalten eines Rades abhängig vom Schlupf untersucht, ergibt sich, dass abhängig von der Reibpaarung ein optimaler Schlupf vorliegt, der die günstigsten Reibverhältnisse zum Untergrund erzielt. Der Soll-Schlupf wird daher nach Möglichkeit ein Wert sein, der dem optimalen Schlupf entspricht, kann jedoch auch von dem optimalen Schlupf mehr oder weniger stark abweichen. Wesentlich ist jedoch, dass der Soll-Schlupf nicht signifikant überschritten wird. Ist dies jedoch der Fall, kommt der Schlupfregler zum Einsatz und bewirkt die Reduzierung des Motormoments.

Solange der kritische Schlupf noch nicht erreicht wird, kommt der Schlupfregler nicht zum Einsatz.

Das erfindungsgemäße Verfahren wird vorzugsweise auf ein Flurförderzeug angewendet, dessen Antrieb von einem Elektromotor oder einem Verbrennungsmotor mit hydrostatischem Getriebe gebildet wird, wobei im Falle eines Elektromotors vorzugsweise ein Drehstrommotor vorgesehen ist.

In einer anderen Ausgestaltung der Erfindung wird die Fahrzeuggeschwindigkeit des Flurförderzeugs aus der Drehzahl eines nicht angetriebenen Rades des Flurförderzeugs bestimmt. Es sind jedoch auch andere Geschwindigkeitsmessmethoden möglich. So kann zum Beispiel ein Beschleunigungssensor vorgesehen werden, wobei dann die gemessenen Fahrzeugbeschleunigung zur aktuellen Fahrzeuggeschwindigkeit integriert werden muss. Denkbar sind ferner auch Sensoren, die die Fahrzeuggeschwindigkeit direkt zur Umgebung, beispielsweise zum Boden, messen, zum Beispiel Radarsensoren, Mikrowellensensoren, optischen oder bildverarbeitende Sensoren usw..

Durch die oben beschriebene Bestimmung der Antriebsdrehzahl kann der Schlupf bei Geradeausfahrt zu jeder Zeit bestimmt werden. Soll der Schlupf auch bei Kurvenfahrt bestimmt werden, ist es erforderlich, entweder den aktuellen Lenkwinkel in die Berechnung mit einzubeziehen oder aber mindestens an zwei Stellen des Fahrzeugs eine Geschwindigkeitsmessung durchzuführen, um so den Geschwindigkeitsvektor am Antriebsrad oder den Antriebsrädern zu bestimmen. In einer Ausgestaltung der Erfindung wird aus der Drehzahl der nicht angetriebenen Räder, dem Lenkwinkel des Antriebsrades, dem Abstand der nicht angetriebenen Räder und dem Abstand zwischen der Achse der nicht angetriebenen Räder und dem Antriebsrad die Referenzgeschwindigkeit ermittelt und aus dieser die Umfangskomponente des angetriebenen Rades, um den Schlupf am Antriebsrad zu bestimmen.

Der Soll-Schlupf kann für eine bestimmte Beschaffenheit des Antriebsrades vorgegeben bzw. ermittelt werden. Es ist aber auch denkbar, den Soll-Schlupf je nach Umgebungsbedingungen zu variieren. Dies geschieht vorzugsweise modellbasiert durch Ermittlung bestimmter Parameter während des Fahrbetriebs.

Wird bei gelenkten Antriebsrädern die Referenzgeschwindigkeit ermittelt, die für ein seitliches Wegdriften des Fahrzeugs ursächlich ist, kann durch Erfassung des axialen Schlupfes dafür gesorgt werden, dass der Lenkwinkel nicht weiter erhöht wird oder auch reduziert wird, um den seitlichen Schlupf nicht über ein vorgegebenes Maß ansteigen zu lassen. Hierfür ist allerdings eine Lenksteuerung erforderlich.

Die Erfindung wird nachfolgend anhand eines in Zeichnungen dargestellten Ausführungsbeispiels näher erläutert.

Fig. 1 zeigt die Anordnung der Räder eines dreirädrigen Flurförderzeugs mit Mitteln zur Durchführung des erfindungsgemäßen Verfahrens.

Fig. 2 zeigt ein Diagramm für das Reibverhalten als Funktion des Schlupfes.

Fig. 3 zeigt eine herkömmliche Antriebsregelung für ein Flurförderzeug.

Fig. 4 zeigt eine Regelvorrichtung zur Regelung des Schlupfes für die Antriebsregelung nach Fig. 3.

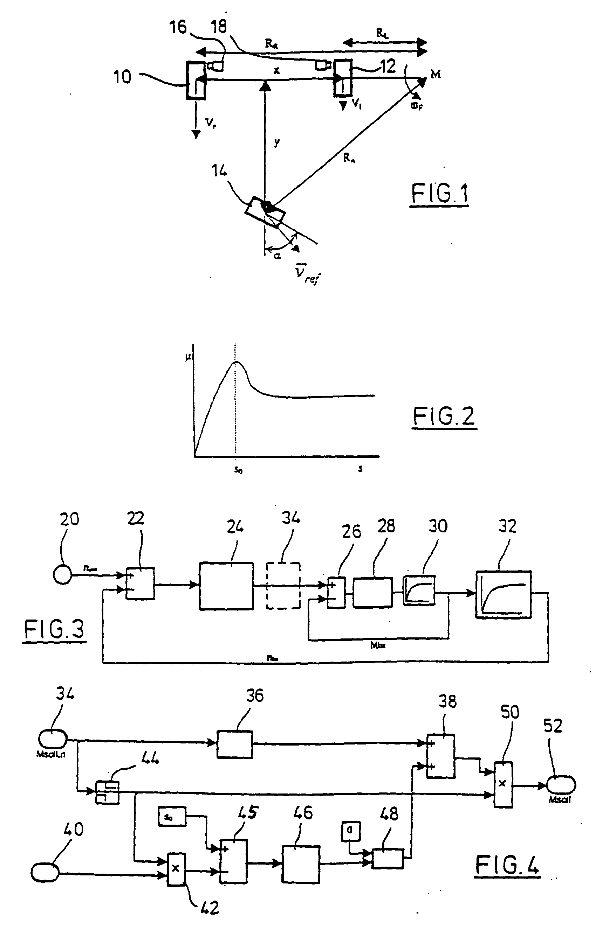

In Fig. 1 ist die Radanordnung eines dreirädrigen Flurförderzeugs wiedergegeben. Man erkennt zwei Räder 10, 12 auf einen gemeinsamen Achse, die nicht angetrieben sind. Ferner ist ein gelenktes Rad 14 zu erkennen, das gleichzeitig Antriebs- bzw. gebremstes Rad darstellt. Den Rädern 10, 12 sind Sensoren 16, 18 zugeordnet, welche die Drehzahl der Räder bzw. ihre Umfangsgeschwindigkeit messen. Diese Geschwindigkeit ist mit $V_r$ bzw. $V_l$ angegeben. Der Radstand zwischen den Rädern 10, 12 ist mit x angegeben. Der Abstand zwischen der Lenkachse des angetriebenen Rades 14 und der Achse ist mit y angegeben. Der Radius zwischen der Achse des gelenkten Rades 14 und dem Momentanpol M ist mit $R_A$ bezeichnet, wobei der Abstand zwischen dem Rad 10 und dem Momentanpol mit $R_R$ und zwischen dem Rad 12 und dem Momentanpol mit $R_L$ angegeben ist. Die Fahrzeugwinkelgeschwindigkeit ist mit $\omega_F$ bezeichnet.

Die Verhältnisse für den Schlupf des Rades 14 sind allgemein durch folgende Formel gekennzeichnet:

$$s = f\left(\omega_a \cdot r_a, \ \overline{V}_{ref}\right) = \omega_a \cdot r_a - V_{ref,u}$$

Für den Fall nach Fig. 1 gelten folgende Beziehungen:

$$\left|\overline{v}_{ref}\right| = \varpi_F \cdot R_A$$

$$\overline{v}_{ref} = \begin{pmatrix} \dfrac{y}{x}\left(v_r - v_l\right) \\ \dfrac{1}{2}\left(v_r + v_l\right) \end{pmatrix}$$

$$v_{ref,u} = \frac{y}{x}(v_r - v_l) \cdot \sin(\alpha)$$
$$+ \tfrac{1}{2}(v_r + v_l) \cdot \cos(\alpha)$$

$$v_{ref,a} = \frac{y}{x}(v_l - v_r) \cdot \cos(\alpha)$$
$$+ \tfrac{1}{2}(v_r + v_l) \cdot \sin(\alpha)$$

In diesen Beziehungen sind

| | |
|---|---|
| M | Momentanpol |
| $V_L$ | Geschw. Linkes Lastrad |
| $V_R$ | Geschw. Rechtes Lastrad |
| $\overline{V}_{ref}$ | Referenzgeschw. Antrieb |
| $\omega_F$ | Fahrzeugwinkelgeschw. |
| R | Abstände zu M |
| x | Achsstand |
| y | Radstand |
| $\alpha$ | Lenkwinkel |
| $V_{ref,u}$ | Umfangskomponente von $\overline{V}_{ref}$ |
| $V_{ref,a}$ | Axialkomponente von $\overline{V}_{ref}$ |

durch die so bestimmte Referenzgeschwindigkeit des Fahrzeugs am Antriebsrad kann durch Vergleich mit der Drehzahl des Antriebsrades (entsprechend der Formel $s = \omega_A \cdot r_A - V_{ref}$) der Schlupf bestimmt werden. Werden positive Drehmomente erzeugt (in Vorwärtsrichtung) wie beim Antreiben vorwärts oder Bremsen rückwärts, stellt sich ein positiver Schlupf ein. Werden dagegen Drehmomente in Rückwärtsrichtung erzeugt (Bremsen bei Vorwärtsfahrt und Antreiben bei Rückwärtsfahrt), stellt sich ein negativer Schlupf ein.

Der Schlupf bzw. das Reibverhalten des angetriebenen Rades 14 hängt von seiner Bereifung und dem Untergrund ab (Reibpaarung). Wie sich aus Fig. 2 ergibt, gibt es einen optimalen Schlupf, bei dem die Reibung maximal ist. Während des Antreibens bzw. des Abbremsens des Rades 14 darf dieser Schlupfwertso nicht überschritten werden, wenn die günstigsten Beschleunigungswerte für das Fahrzeug erzielt werden sollen bzw. ein instabiler Bereich und damit ein Durchrutschen vermieden werden soll.

In Fig. 3 ist eine herkömmliche Antriebsregelung für ein Flurförderzeug, beispielsweise für das Rad 14, angedeutet. Über z. B. ein "Gaspedal" 20 wird ein Drehzahlsollwert $n_{soll}$ vorgegeben, der in einem Drehzahlsollwert-Istwert-Vergleich 22 mit dem Istwert der Drehzahl verglichen wird. Die Istdrehzahl $n_{ist}$ wird in herkömmlicher Weise ermittelt. Die Regelabweichung gelangt auf einen Drehzahlregler 24, der einen Sollwert für das Antriebsmoment $M_{soll,n}$ vorgibt. Das Sollmoment wird auf einen Soll-Ist-Wert-Vergleich 26 gegeben, dessen Ausgang auf einen Momentenregler 28 geht. Der Momentenregler 28 erzeugt einen Stellwert für den Antrieb 30 des Flurförderzeugs, beispielsweise einen Drehstrommotor im elektrischen oder auch einer Druckquelle (Verstellpumpe) im hydrostatischen Antriebsstrang. Block 30 beschreibt das Übertragungsverhalten des Antriebs. Block 32 gibt das Fahrzeug wieder, dessen Geschwindigkeit nicht immer proportional ist zur Drehzahl des Motors 30, da selbst bei Geradeausfahrt ein Schlupf vorhanden ist und vor allem bei Kurvenfahrt die Drehzahl nicht proportional ist der Geschwindigkeit des Fahrzeugs. Der Momenten-Ist-Wert $M_{ist}$ des Antriebs 30 wird auf den Soll-Ist-Wert-Vergleich 26 rückgeführt. Bei einem elektrischen Antrieb wird als momentenbeschreibende Größe der momentenbildende Strom zurückgeführt. Bei einem hydrostatischen Antrieb ist der Druck im Antriebszweig entsprechend zurückzuführen.

Im Block 34 findet bei einer erfindungsgemäßen Antriebsregelung die Reduzierung der Drehmomente am Antrieb statt, was in Fig. 4 näher dargestellt ist.

Wie aus Fig. 4 ersichtlich, wird das Motormoment des Antriebs durch den Schlupf beeinflusst. Dies geschieht gemäß Fig. 3 im Block 34, dessen Einzelheiten aus Fig. 4 näher hervorgehen.

Der Ausgang des Drehzahlreglers $M_{soll,n}$, wie bei 34a angedeutet, gelangt über einen Block 36 auf ein Summierglied 38. Der Block 36 hat lediglich die Aufgabe, den Absolutwert des Momentensollwerts zu bilden, der bekanntlich positiv oder negativ sein kann, je nachdem, in welchem Quadranten der Antrieb 14 betrieben wird. Ein Schlupf-Ist-Wert am Eingang 40 wird in einem Multiplikationsglied 42, mit dem Vorzeichen des vom Drehzahlregler verlangten Sollmoments multipliziert. Die Vorzeichenermittlung des Sollmoments $M_{soll,n}$ erfolgt in Block 44. Der Schlupf-Ist-Wert wird auf obige Weise ermittelt, d. h. es wird festgestellt, wie gross die Differenz ist zwischen der Fahrzeuggeschwindigkeit und der Umfangsgeschwindigkeit des angetriebenen Rades 14. Der gemessenen Schlupf erhält das jeweilig Vorzeichen des Moments vom Drehzahlregler 24. In einem Summierglied 45 wird er mit einem vorgegebenen Schlupfwert $S_0$ verglichen, der z. B. dem optimalen Sollwert entspricht. Der Differenzbetrag gelangt auf einen Schlupfregler 46, dessen Ausgang auf das Summierglied 38 gegeben wird. Im Block 48, auf den der Ausgang des Schlupfreglers 46 zunächst gegeben wird, wird dafür gesorgt, dass nur dann eine Weitergabe des "Korrekturmoments" auf das Summierglied 38 erfolgt, wenn der gemessene Schlupf größer ist als der vorgegeben Schlupf $S_0$. Der Differenzbetrag wird dann bekanntlich negativ. Es wird daher nur ein negatives Korrekturmoment auf das Summierglied 38 geschaltet, damit das Moment des Motors 30 entsprechend reduziert wird, um die Antriebskraft am Rad 14 bzw. die Bremskraft zu reduzieren.

Um die vorangegangene Absolutwertbildung in Block 36 nach dem Korrektureingriff des Schlupfreglers 46 wieder rückgängig zu machen und den Momentensollwert $M_{soll}$ vorzeichenrichtig auf den Antrieb wirken zu lassen, wird das in Block 44 bestimmte Vorzeichen wieder aufmultipliziert und am Ausgang 52 bereitgestellt.

Mit dem oben beschriebenen Verfahren kann der Schlupf bei Geradeausfahrt zu jeder Zeit bestimmt werden. Bei der Kurvenfahrt ist an zwei Stellen des Fahrzeugs (Räder 10, 12) die Geschwindigkeit gemessen worden, um den Geschwindigkeitsvektor $\overline{V}_{ref}$ (Referenzgeschwindigkeit) am Antrieb 14 bestimmen zu können. Die Bestimmung der Referenzgeschwindigkeit ist weiter oben bereits beschrieben. Aus der Referenzgeschwindigkeit bzw. ihrem Vektor lassen sich die Umfangs- und die axiale Komponente errechnen. Die Umfangskomponente ist die Geschwindigkeit, welche für die Bestimmung des Ist-Schlupfes herangezogen wird. Die axiale Komponente gibt das Ausmass des seitlichen Rutschens des Rades 14 wieder, das nach Möglichkeit ebenfalls einen bestimmten Wert nicht überschreiten soll. Hier kann z. B. vorgesehen werden, dass in die Lenkung eingegriffen wird derart, dass vermieden wird, dass der Lenkwinkel $\alpha$ nicht noch größer wird. Es ist auch möglich, den Lenkwinkel etwas zu reduzieren oder andere Massnahmen zu ergreifen, welche zur Reduzierung des seitlichen Schlupfes führen.

**Patentansprüche**

1. Verfahren zur Beeinflussung der Traktion oder des Bremsmoments an mindestens einem Antriebsrad eines einen Antriebsmotor aufweisenden Flurförderzeugs, bei dem der Schlupf zwischen Antriebsrad und Boden durch Vergleich von gemessener oder errechneter Umfangsgeschwindigkeit des Antriebsrades und gemessener Fahrzeuggeschwindigkeit des Flurförderzeugs bestimmt wird, wobei der gemessene Schlupf Sist mit einem Sollwert S0 verglichen und das Drehmoment des Antriebsmotors verringert wird, **dadurch gekennzeichnet, dass** das von einem Drehzahlregler (24) vorgegebene betragsmäßige Drehmoment Msoll eines Drehmomentreglers (28) für den Antriebsmotor (30) um die betragmäßige Abweichung des Ist-Schlupfes Sist vom Sollschlupf S0 verringert wird, wobei der so ermittelte verringerte Wert des Solldrehmoments mit dem Vorzeichen des Solldrehmoments Msoll des Drehzahlreglers (24) versehen wird.

2. Verfahren nach Anspruch 1, **dadurch gekennzeichnet, dass** der Antriebsmotor (30) ein Elektromotor oder ein hydraulischer Motor ist.

3. Verfahren nach Anspruch 2, **dadurch gekennzeichnet, dass** ein Drehstrommotor vorgesehen ist.

4. Verfahren nach einem der Ansprüche 1 bis 3, **dadurch gekennzeichnet, dass** die Fahrzeuggeschwindigkeit aus der Drehzahl mindestens eines nicht angetriebenen Rades (10, 12) des Flurförderzeugs bestimmt wird.

5. Verfahren nach einem der Ansprüche 1 bis 4, **dadurch gekennzeichnet, dass** bei zwei nicht angetriebenen Rädern (10, 12) die Drehzahl gemessen wird, um die Referenzgeschwindigkeit am Antriebsrad (14) aus der Fahrzeuggeometrie vektoriell (Richtung und Größe) bestimmen zu können.

6. Verfahren nach Anspruch 5, **dadurch gekennzeichnet, dass** durch Messung des Lenkwinkels am gelenkten Antriebsrad (14) eine Berechnung der Umfangskomponente und/oder der Axialkomponente der Referenzgeschwindigkeit stattfindet.

7. Verfahren nach einem der Ansprüche 1 bis 6, **dadurch gekennzeichnet, dass** der Soll-Schlupf für eine bestimmte Reibpaarung von einem optimalen Schlupfwert gebildet wird.

8. Verfahren nach Anspruch 7, **dadurch gekennzeichnet, dass** der Soll-Schlupf während des Betriebes des Flurförderzeugs ermittelt wird.

9. Verfahren nach Anspruch 5 oder 6, **dadurch gekennzeichnet, dass** aus der Referenzgeschwindigkeit des gelenkten Antriebsrades (14) die axiale Geschwindigkeitskomponente ermittelt wird und der Lenkwinkel begrenzt bzw. reduziert wird, wenn die axiale Geschwindigkeitskomponente einen vorgegebenen Wert übersteigt.

## Claims

1. A method for influencing the traction or the braking torque of at least one driving wheel of an industrial truck having a driving motor, wherein the slip between the driving wheel and the ground is determined by the comparison of the measured or calculated the circumferential speed of the driving wheel and the measured speed of the industrial truck, the measured slip is compared with a setpoint SO and the driving torque of the driving motor is reduced, **characterized in that** the amount of the torque $M_{soll}$ of a torque controller (28) for the driving motor (30) determined by a rpm controller (24) is reduced by the amount of the difference of the actual slip Sist and the desired slip S0, the thus determined reduced value for the actual torque is provided with the sign of the actual torque $M_{soll}$ of the rpm controller (24).

2. The method according to claim 1, **characterized in that** the driving motor (30) is an electric motor or hydraulic engine.

3. The method according to claim 2, **characterized in that** a three-phase a.c. motor is provided.

4. The method of one of the claims 1 to 3, **characterized in that** the vehicle speed is determined from the rpm of at least one driven wheel (10, 12) of the industrial truck.

5. The method of one of the claim 1 to 4, **characterized in that** the speed is measured for two non-driven wheels (10, 12) in order to determine the reference speed of the driving wheel (14) as a vector quantity (direction and magnitude) from the vehicle geometry.

6. The method of claim, **characterized in that** a calculation of the circumferential component and/or the axial component of the reference speed is performed by measuring the steering angle on the steered driving wheel (14).

7. The method of one of the claims 1 to 6, wherein the desired slip for a certain friction pairing is constituted by an optimum slip value.

8. The method of claim 7, wherein the desired slip is determined when the industrial truck is operation.

9. The method of claim 1, of claim 5 or of claim 6, **characterized in that** the axial speed component is determined from the reference speed of the steered driving wheel (14) and the steering angle is limited or reduced if the axial speed component exceeds a preset point.

## Revendications

1. Procédé permettant d'influer sur la traction ou le couple de freinage exercé sur au moins une roue motrice d'un chariot de manutention présentant un moteur d'entraînement, au cours duquel le patinage entre la roue motrice et le sol est déterminé par comparaison de la vitesse périphérique mesurée ou calculée de la roue motrice et de la vitesse mesurée du chariot de manutention, le patinage mesuré Sist étant comparé à une valeur de consigne S0 et le couple du moteur d'entraînement étant diminué, **caractérisé en ce que** la valeur du couple Msoll, prédéfinie par un régulateur de vitesse (24), d'un régulateur de couple (28) pour le moteur d'entraînement (30) est diminuée de la valeur de l'écart du patinage réel Sist par rapport au patinage de consigne S0, la valeur diminuée ainsi déterminée du couple de consigne est pourvue du signe du couple de consigne Msoll du régulateur de vitesse (24).

2. Procédé selon la revendication 1, **caractérisé en ce que** le moteur d'entraînement (30) est un moteur électrique ou un moteur hydraulique.

3. Procédé selon la revendication 2, **caractérisé en ce qu'**un moteur triphasé est prévu.

**4.** Procédé selon l'une quelconque des revendications 1 à 3, **caractérisé en ce que** la vitesse du véhicule est déterminée à partir de la vitesse de rotation d'au moins une roue non entraînée (10, 12) du chariot de manutention.

**5.** Procédé selon l'une quelconque des revendications 1 à 4, **caractérisé en ce que** la vitesse de rotation est mesurée sur deux roues non entraînées (10, 12) pour pouvoir déterminer vectoriellement (direction et grandeur) la vitesse de référence de la roue motrice (14) à partir de la géométrie du véhicule.

**6.** Procédé selon la revendication 5, **caractérisé en ce que** la mesure de l'angle de braquage au niveau de la roue motrice dirigée (14) permet de calculer la composante périphérique et/ou la composante axiale de la vitesse de référence.

**7.** Procédé selon l'une quelconque des revendications 1 à 6, **caractérisé en ce que** le patinage de consigne dans des conditions de frottement données est constitué par une valeur de patinage optimale.

**8.** Procédé selon la revendication 7, **caractérisé en ce que** le patinage de consigne est déterminé pendant le fonctionnement du chariot de manutention.

**9.** Procédé selon la revendication 5 ou 6, **caractérisé en ce que** la composante de vitesse axiale est déterminée à partir de la vitesse de référence de la roue motrice dirigée (14) et l'angle de braquage est limité et/ou réduit lorsque la composante de vitesse axiale dépasse une valeur prédéfinie.

FIG.1

FIG.2

FIG.3

FIG.4

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19826945 A1
- JP 8265917 A